# EUROPEAN PATENT SPECIFICATION

(11) **EP 3 113 092 B1**
(45) Date of publication and mention of the grant of the patent: **01.12.2021**
(21) Application number: 15175287.0
(22) Date of filing: 03.07.2015
(51) Int. Cl.: G06F 9/455, G06Q 10/10, H04W 4/00, H04W 4/02

(54) **METHOD AND APPARATUS FOR MANAGING VIRTUAL EXECUTION ENVIRONMENTS USING CONTEXTUAL INFORMATION FRAGMENTS**
VERFAHREN UND VORRICHTUNG ZUR VERWALTUNG VIRTUELLER AUSFÜHRUNGSUMGEBUNGEN MIT KONTEXTINFORMATIONSFRAGMENTEN
PROCÉDÉ ET APPAREIL POUR GÉRER DES ENVIRONNEMENTS D'EXÉCUTION VIRTUELS À L'AIDE DE FRAGMENTS D'INFORMATIONS CONTEXTUELLES

(43) Date of publication of application: 04.01.2017
(73) Proprietor: Huawei Technologies Co., Ltd., Longgang District Shenzhen, Guangdong 518129 (CN)
(72) Inventor: KARHUNEN, Janne, 16440 Kista (SE)
(74) Representative: Maiwald Patent- und Rechtsanwaltsgesellschaft mbH

(56) References cited:
- JEREMY ANDRUS ET AL: "Cells", OPERATING SYSTEMS PRINCIPLES, ACM, 2 PENN PLAZA, SUITE 701 NEW YORK NY 10121-0701 USA, 23 October 2011 (2011-10-23), pages 173-187, XP058005753, DOI: 10.1145/2043556.2043574 ISBN: 978-1-4503-0977-6
- Rohit Madhukar Chaskar: "LOCATION BASED AUTOMATIC SOUND PROFILE SWITCHING APPLICATION IN ANDROID MOBILES", International Journal of Computer & Communication Technology ISSN (PRINT, 1 January 2013 (2013-01-01), pages 975-7449, XP055235683, Retrieved from the Internet: URL:http://interscience.in/IJCCT_Vol4Iss2/ 84-87.pdf
- TINGXIN YAN ET AL: "Fast app launching for mobile devices using predictive user context", MOBISYS 2012: 10TH INTERNATIONAL CONFERENCE ON MOBILE SYSTEMS, APPLICATIONS AND SERVICES, 1 January 2012 (2012-01-01), page 113, XP055106616, DOI: 10.1145/2307636.2307648 ISBN: 978-1-45-031301-8
- None

## Description

### TECHNICAL FIELD

The aspects of the present disclosure relate generally to mobile computing devices and in particular to management of virtual computing environments in a mobile computing device.

### BACKGROUND

In recent years wireless devices have evolved from basic mobile phones providing simple voice and texting functionality into powerful mobile computing devices such as smart phones, tablets, or phablets. These mobile computing devices host a wide range of powerful software applications providing advanced feature sets covering a wide range of application areas including communications, internet, entertainment, banking, personal fitness as well as many others. Mobile computing devices are no longer a luxury item reserved for technology aficionados but instead have become essential tools for both business and personal use.

Over the years various virtualization methods have emerged to provide multiple execution environments on a single computing device. Hardware or platform virtualization creates an environment that appears to the hosted software as a real hardware based computer making the virtualization invisible. Hardware virtualization allows complete operating systems to be hosted in separate isolated environments on a single hardware computing platform and completely isolates each computing environment providing the security and protections necessary to protect corporate and personal information. Because virtualization is done at a hardware level, an entire conventional operating system can be hosted allowing each environment to run entirely different operating systems and applications without knowing whether they arc running in a virtual environment or directly on a hardware platform.

Virtualization can also be done at the operating system level, often referred to as operating system virtualization. With operating system virtualization multiple isolated computing environments or containers are hosted on a single conventional operating system. Operating system virtualization often allows different versions of the same type of operating system, such as Linux, to be hosted in each container but does not allow different operating systems, such as Linux and Windows, to be hosted within different containers running on a single hardware platform.

The software that creates and runs virtual machines is referred to as a hypervisor or virtual machine monitor. A native hypervisor is one that runs directly on the hardware platform and creates one or more virtual environments in which a guest operating system is run. Alternatively a hypervisor may be run on top of or within a conventional operating system in which case they may be referred to as a hosted hypervisor. In either of these configurations, native hypervisor or hosted hypervisor, the virtual environments are managed and controlled by the hypervisor that created them.

Mobile phones or more generally, mobile computing devices, are becoming increasingly complex providing rich feature sets and a wide range and large number of applications for their users. This complexity makes it difficult for individuals and corporate Information Technology (IT) administrators to manage and secure these mobile devices. IT administrators prefer to manage isolated and known environments as a way to minimize changes in the systems and provide the required level of security in the managed environments and virtualization provides a useful solution for creating these isolated and known environments.

As a result of these trends, end users of mobile computing environments will find it necessary to manage multiple virtual environments on their mobile computing devices. Manually managing and switching between multiple environments can be burdensome for users. A users must first determine for themselves which virtual environment should be used then deactivate any currently active virtual environments, activate the desired virtual environment and wait while the mobile computing device launches the selected virtual environment.

Thus there is a need for improved methods and apparatus for managing virtual execution environments on a mobile computing device.

(J. Andrus, C. Dall, A. Van't Hof, O. Laadan, J. Nieh, "Cells: A Virtual Mobile Smartphone Architecture", Operating System Principles, ACM, 173-187, ISBN: 978-1-4503-0977-6, doi: 10.114512043556.2043574 (2011)) discloses a virtualization architecture that runs several virtual phones, VPs, concurrently on one physical smartphone and manages the sharing of access to the physical smartphone's hardware resources between the VPs. At any one time, one VP is in the foreground, and one or more VPs may run in the background. A VP may be switched into the foreground by user action or in response to an event, such as an incoming call or text message.

(T. Yan, D. Chu, D. Ganesan, A, Kansal, J. Liu, "Fast App Launching for Mobile Devices Using Predictive User Context", Mobisys 2012: 10th International Conference on Mobile Systems, Applications and Services, 113, ISBN: 978-1-45-031301-8, doi: 10.1145/2307636.2307648 (2012)) discloses using location information and other information about user behaviour to predict which apps the user is likely to launch, so as to proactively execute pre-launch steps and speed up the actual launch.

(R. M. Chaskar, "Location based automatic sound profile switching application in Android mobiles", International Journal of Computer & Communication Technology 4 (2), 84-87, ISSN: 0975-7449 (2013)) discloses using location information to switch a phone to silent mode in places where the ringing tone is considered annoying, and to flight mode near petrol pumps where the transmission of RF energy is considered dangerous.

### SUMMARY

It is an object of the present invention to provide methods and apparatus to improve the managing of virtual execution environments on a mobile computing apparatus. This object is solved by the subject matter of the independent claims. Further advantageous modifications can be found in the dependent claims.

It is to be understood, however, that the description and drawings are designed solely for purposes of illustration and not as a definition of the limits of the disclosed invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the following detailed portion of the present disclosure, the invention will be explained in more detail with reference to the example embodiments shown in the drawings, in which:
Figure 1 illustrates a block diagram showing an exemplary architecture incorporating aspects of the disclosed embodiments;
Figure 2 illustrates a block diagram of an exemplary computing device incorporating aspect of the disclosed embodiments;
Figure 3 illustrates a flow chart of an exemplary method for managing virtual execution environments incorporating aspects of the disclosed embodiments.

### DETAILED DESCRIPTION OF THE DISCLOSED EMBODIMENTS

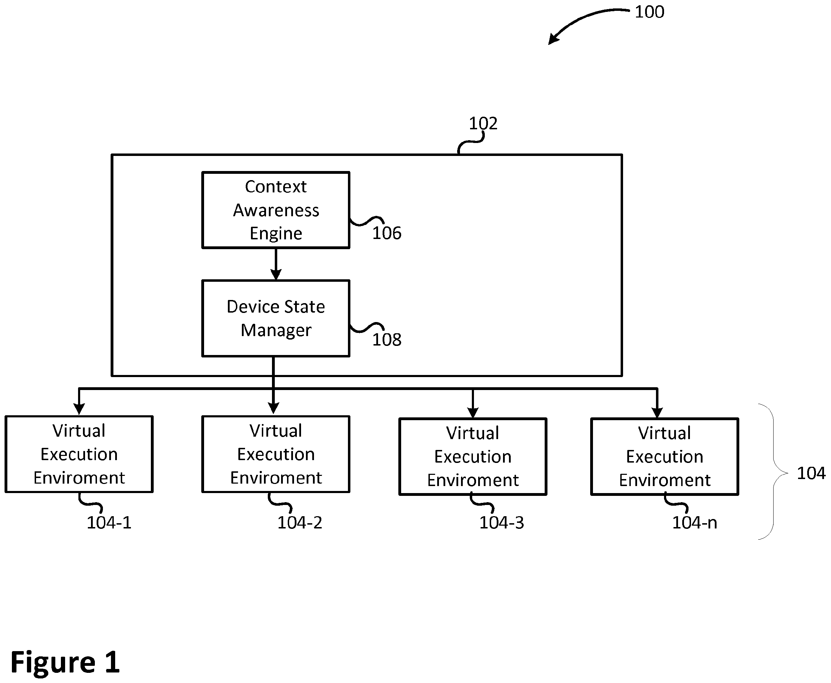

Referring now to Figure 1 there can be seen a block diagram illustrating an embodiment of an architecture 100 which may be advantageously employed to provide automatic activation of virtual execution environments on a mobile computing device according to an embodiment of the present invention. The software architecture includes a collection of virtual execution environments 104-1, 104-2, 104-3, 104-n, generally referred to as virtual execution environments 104, where "n" represents the possible number of virtual execution environments in the collection. Each virtual execution environment 104-1, 104-2, 104-3, 104-n provides a fully isolated computer processing environment in which an operating system and a variety of applications may be executed. The virtual execution environments 104-1, 104-2, 104-3, 104-n may be created using any appropriate virtualization technique such as full hardware virtualization, operating system virtualization, or an appropriate combination or hybrid virtualization technique.

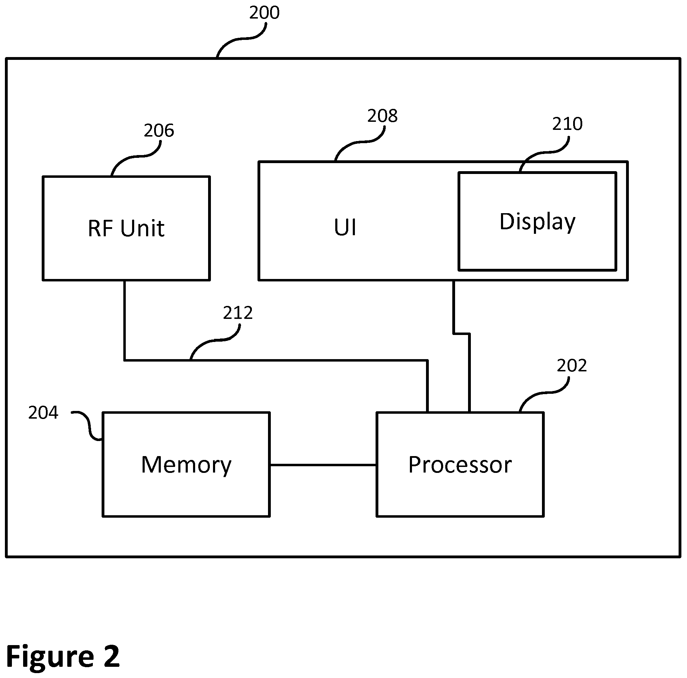

The aspects of the disclosed embodiments are directed to enabling automatic activation of virtual execution environments on an apparatus such as a mobile computing device employing the architecture 100. Figure 2 illustrates a block diagram of an exemplary apparatus 200 appropriate for implementing aspects of the disclosed embodiments. The apparatus 200 includes a processor 202 coupled to a computer memory 204, a radio frequency (RF) unit 206, a user interface (UI) 208 and a display 210. The apparatus 200 is appropriate for use as a computing device, which in certain embodiments may be a mobile computing device, including any of various types of wireless communications user equipment including cell phones, smart phones and tablet devices. For the purposes of the description herein, the apparatus 200 will be referred to as a mobile computing device.

The processor 202 may be a single processing device or may comprise a plurality of processing devices including special purpose devices, such as for example, digital signal processing (DSP) devices, microprocessors, specialized processing devices or general purpose computer processors. The processor 202 may be configured to implement any of the methods for automatic selection of virtual computing environments 104-1, 104-2, 104-3, 104-n as is described herein. The processor 202 often includes a CPU working in tandem with a graphics processing unit (GPU) and may include a DSP to handle signal processing tasks. In certain embodiments the processor 202 may include one or more, often four, cores.

The processor 202 is coupled to a memory 204 which may be a combination of various types of volatile and non-volatile computer memory such as for example read only memory (ROM), random access memory (RAM), magnetic or optical disk, or other types of computer memory. The memory 204 stores computer program instructions that may be accessed and executed by the processor 202 to cause the processor 202 to perform a variety of desirable computer implemented processes or methods such as the automatic selection of virtual execution environments as described herein.

The program instructions stored in memory 204 are organized as sets or groups of program instructions referred to in the industry with various terms such as programs, software components, software modules, units, etc. Each module may include a set of functionality designed to support a certain purpose. For example a software module may be of a recognized type such as a hypervisor 102, a virtual execution environment 104, an operating system, an application, a device driver, or other conventionally recognized type of software component. Also included in the memory 204 are program data and data files which may be stored and processed by the processor 202 while executing a set of computer program instructions.

In certain embodiments the mobile computing device 200 includes an RF Unit 206 coupled to the processor 202 and configured to transmit and receive RF signals based on digital data 212 exchanged with the processor 202. The RF Unit 206 is configured to transmit and receive radio signals that may conform to one or more conventional wireless communication standards, such as for example Long Term Evolution (LTE) and LTE-Advanced (LTE-A) developed by the third generation partnership project (3GPP), Wi-fi based on the institute of electrical and electronics engineers (IEEE) 802.11 standards, as well as others. In certain embodiments, the RF Unit 206 includes receivers capable of receiving and interpreting messages sent from satellites in the global positioning system (GPS) and work together with information received from other transmitters to obtain positioning information pertaining to the location of the computing device 200. Alternatively, the mobile computing device 200 may not include a RF unit 206.

The UI 208 may include one or more user interface elements such as a touch screen, keypad, buttons, voice command processor, as well as other elements adapted for exchanging information with a user. The UI 208 may also include a display unit 210 configured to display a variety of information appropriate for a computing device or mobile user equipment and may be implemented using any appropriate display type such as for example organic light emitting diodes (OLED), liquid crystal display (LCD), as well as less complex elements such as LEDs or indicator lamps. In certain embodiments the display unit 210 incorporates a touch screen for receiving information from the user of the computing device 200.

Referring again to Figure 1, the virtual execution environments 104, which may also be referred to as sandboxes, are created and managed by a hypervisor 102 running on a hardware computing device, such as the processor 202 of Figure 2. The hypervisor 102 may be a native hypervisor running directly on the hardware computing device or alternatively the hypervisor 102 may be a hosted hypervisor running within a conventional operating system. With either of these approaches the hypervisor 102 creates each of the virtual execution environments 104-1 to 104-n and manages the execution state of each created virtual execution environment 104 throughout its lifecycle.

The state of a virtual execution environment 104 refers to its execution status. For example a virtual execution environment 104-1, 104-2, 104-3, 104-n may have a state of created, running, paused, stopped etc. In certain embodiments it may be advantageous to allow more than one virtual execution environment 104-1, 104-2, 104-3, 104-n to be running at the same time. For example, in these embodiments it may be useful to have additional states such as running in the foreground where a virtual execution environment 104-1, 104-2, 104-3, 104-n is running in the foreground and controls the user interface components of the mobile computing device 100 (such as the user interface 208).

As another example, it may be useful to have additional states such as running in the background where one or more virtual execution environment 104-1, 104-2, 104-3, 104-n is running in the background but does not have access to the user interface components of the mobile computing device 100 (such as the user interface 208). Those skilled in the art will readily recognize that a variety of different states may be employed without straying from the spirit and scope of the disclosed embodiments.

The hypervisor 102 comprises a context awareness engine 106 and a device state manager 108. The context awareness engine 106 collects and manages contextual information for the mobile computing device 200 and determines context awareness information based on the collected contextual information. The context awareness information is made available to the device state manager 108 which automatically manages the states of the different virtual execution environments 104-1 to 104-n based on information fragments in the contextual information. For example, when the architecture 100 is implemented on the mobile computing device 200, such as a mobile phone, separate and isolated mobile phone applications may be executed in each virtual execution environment 104-1, 104-2, 104-3, 104-n.

For example, the separate and isolated mobile phone applications could include a user's work phone, which requires or has a restrictive and protective security policy. The separate and isolated mobile phone applications could also include a user's private phone, which requires or has a less restrictive security policy, allowing activities such as surfing the internet and game playing. These are merely examples, and it will be understood that the separate and isolated mobile phone applications can include any one of a number of security policies.

In one embodiment, the device state manager 108 may be configured to switch the work phone application to a running state and the private phone application to a paused state when the user enters a corporate facility. The information fragments collected as contextual information by the mobile device 200, such as the corporate facility location, the users current location, and a corporate security policy, may be used to automatically enable and disable one or more of the virtual execution environments 104-1, 104-2, 104-3, 104-n so a user is always presented with the virtual execution environment 104-1, 104-2, 104-3, 104-n they are most likely to desire at any point in time. Information fragments from the contextual information may also be used to prevent or allow access to particular virtual execution environments 104 by controlling the state of the individual virtual execution environments 104-1, 104-2, 104-3, 104-n.

Furthermore, the context awareness engine 106 collects various pieces of general information that may aide in selection of the most appropriate virtual execution environment 104-1, 104-2, 104-3, 104-n for the current conditions. The general information collected may include for example:
- home and office location(s);
- device user's policies related to device use;
- corporation's security policies;
- device user's working hours;
- business trip information;
- vacation information;
- user configured setup and rules;
- known or trusted wireless access networks; and
- other related information.

This collected information is processed in the context awareness engine 106 to create context meta-data that may be used later by the device state manager 108 for making state and access decisions for the virtual execution environments 104-1, 104-2, 104-3, 104-n.

The context awareness engine 106 also collects and processes current information about the current condition and context of the mobile computing device 200. The current contextual information may include for example:
- the device's geographic location;
- accelerometer data;
- battery and charging status;
- proximity to wireless access networks; and
- current date and time.

In certain embodiments, it is desirable to apply additional processing to the collected current information to enhance the current contextual information with higher level concepts such as whether the device 200 is at rest or in motion, walking, driving in a car, dropped, etc.

In certain embodiments, each virtual execution environment 104-1, 104-2, 104-3, 104-n may be viewed from a user's perspective as separate and distinct devices. For example, a user who needs to carry multiple mobile computing devices, such as a business phone and a personal phone, may replace these multiple devices with a single mobile computing device 200 that implements multiple virtual execution environments 104-1, 104-2, 104-3, 104-n. In this embodiment, one of the virtual execution environments 104-1 can be configured to run a business/work phone application and another virtual execution environment 104-2 can be configured to run a personal/private or home phone application. The user may then switch between the virtual execution environments 104-1, 104-2 as desired, thereby obtaining both the functionality and security of multiple separate devices with a single mobile computing device 200.

Manually switching between different ones of the virtual execution environments 104-1, 104-2, 104-3, 104-n can be burdensome for users of the mobile computing device 200. When switching between virtual execution environments 104-1, 104-2, 104-3, 104-n a user needs to determine which environment to use, select the desired virtual execution environment from the set of virtual execution environments 104-1, 104-2, 104-3, 104-n, and possibly wait while the selected virtual execution environment comes up and connects to a wireless network. The above described methods and apparatus may be used to ease this burden by automatically managing the states of the virtual execution environments 104-1, 104-2, 104-3, 104-n to ensure that the virtual execution environment most likely to be needed by the mobile computing device 200 is running when needed.

It is instructive to look at some examples of how contextual awareness, i.e. analysis of contextual meta-data and current contextual information, may be used to manage virtual execution environments 104-1, 104-2, 104-3, 104-n. Referring to the above example with the business/work device and the home/private device, the business device, i.e. a virtual execution environment running a mobile communication application configured for business use, may be automatically enabled during business hours. Enabling the business device could be based on context meta data including the business hours and contextual information fragments including the current date and time. The term "enabled" as used herein refers to changing the state of a virtual execution environment 104-1, in which an application such as a mobile communications application is running, to a foreground or running state and switching the remaining virtual execution environments 104-2, 104-3, 104-n to a non-accessible state, such as running in the background, paused, or stopped.

Alternatively, the business device could be automatically enabled when the mobile computing device 200 is detected as entering the office or work space based on context meta data including the office location and contextual information fragments including the current geographic location of the mobile computing device 200. The business device may be automatically disabled and the home device automatically enabled when the mobile computing device 200 is detected as arriving at the user's home based on context meta data including the home and office locations and contextual information fragments including the current geographic location of the mobile computing device 200.

As another example, when the user of the mobile computing device 200 goes on a business trip, the business device could be always enabled or disabled based on information fragments including corporate security policies and a corresponding business calendar.

Knowledge of wireless access networks may also be advantageously employed in certain embodiments. These wireless access networks may include wireless access networks known to the mobile computing device 200, such as a work Wi-Fi network, home Wi-Fi network, or other known wireless access network. An example of environment switching based on wireless access networks may be to automatically enable or activate the business device when the mobile computing device 200 connects to the business Wi-Fi network. Similarly, the home device may be automatically enabled when the mobile computing device 200 detects a wireless access network associated with the user's home.

In one embodiment, switching between virtual execution environments 104-1, 104-2, 104-3, 104-n may be based on a connection to a known wireless access network or alternatively may be based on identification of a wireless access network without actually establishing a connection to the wireless access network. In either case, connection or identification, proximity to the wireless access network may be used for selection of a desired virtual execution environment 104-1, 104-2, 104-3, 104-n.

In addition to automatically enabling or switching between virtual execution environments 104-1, 104-2, 104-3, 104-n, the above described architecture 100 may be advantageously employed to automatically manage device security while manually switching between virtual execution environments 104-1, 104-2, 104-3, 104-n. For example, a mobile computing device 200 could be configured to always require strong authentication before allowing a business device to be activated based on context meta data including corporate IT security policies. A particular virtual execution environment used to run very secure device applications is prevented from running anytime the mobile computing device 200 is detected as being outside a predefined set of office locations based on context meta data including corporate IT security policies, locations of corporate facilities, and contextual information fragments including the current geographic location of the mobile computing device 200.

In one embodiment, when a battery level of the mobile computing device 200 falls below a pre-determined level, a low power consumption virtual execution environment could be automatically enabled. In this example, a high power consuming virtual execution environment may be disabled based on contextual information fragments including the battery level and charging status.

The above examples of the use of context meta-data and current contextual information to manage and automatically enable/disable virtual execution environments are intended only as an aide to understanding and those skilled in the art will readily recognize that other applications are possible without straying from the scope of the presently disclosed embodiments.

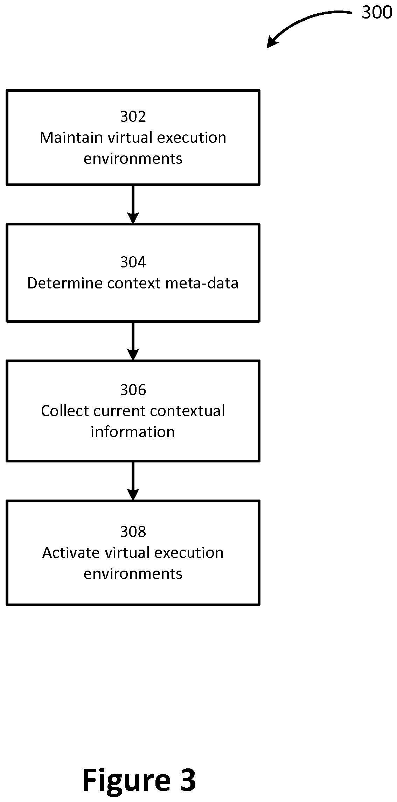

Figure 3 illustrates an exemplary method for managing virtual execution environments appropriate for implementation on a computing device such as the computing device 200 described above and with reference to Figure 2. The exemplary method 300 is configured to manage 302 a set of two or more virtual execution environments such as the virtual execution environments 104-1, 104-2, 104-3, 104-n. The virtual execution environments being managed 302 may be any appropriate type of virtual execution environment including hardware virtualization, operating system virtualization, or other virtualization technique. The virtual execution environments may be isolated from each other such that software running in one virtual execution environment is not able to access data or otherwise corrupt software and data in a different virtual execution environment. In certain embodiments one or more of the virtual execution environments is implemented with full hardware virtualization and the virtual execution environments run a host operating system.

The exemplary method 300 determines 304 context meta-data for the virtual execution environments being managed or maintained 302. In certain embodiments it is advantageous to further analyze or process the context meta-data to form environment meta-data corresponding to each virtual execution environment. The context meta-data or environment meta-data may include various pieces of context information such as a user's home location, user's work location or working hours, and corporate policies including corporate IT security policies. It may also be desirable to incorporate a user's calendar information, such as business trip information and vacation information, into the context or environment meta-data in order to improve automatic management of the virtual execution environments.

Current contextual information about things and conditions around the mobile computing device 200 is collected 306 (e.g. using sensors inside the computing devices) and provided to a context awareness engine such as the context awareness engine 106 described above. This collected current contextual information may include information about context of the mobile computing device 200 such the current date and time, current geographic location of the device, or movement status of the device such as acceleration, velocity, (WLAN) networks in close proximity to the device etc. It may also be advantageous to collect current contextual information regarding the status of the mobile computing device 200, where the contextual information includes parameters such as battery level, charging status, device temperature, etc.

The collected current contextual information, context meta-data, and environment meta-data is then used to automatically activate 308 one or more of the virtual execution environments that a user of the mobile computing device 200 is most likely to require.

## Claims

1. A mobile computing apparatus (200) comprising a processor (202), wherein the processor (202) is configured to:
maintain a plurality of virtual execution environments (104);
determine context meta-data for the plurality of virtual execution environments (104);
collect current contextual information for the computing apparatus (200); and
activate one or more of the plurality of virtual execution environments (104) based on the collected current contextual information and the context meta-data,
**characterized in that**
the processor (202) is configured to:
determine the context meta-data for the plurality of virtual execution environments (104) by determining a plurality of environment meta-data, wherein each environment meta- data in the plurality of environment meta-data is associated with a corresponding virtual execution environment in the plurality of virtual execution environments (104), wherein the environment meta-data comprises corporate IT security policies and a user's working location, wherein the processor (202) is configured to automatically update the environment meta-data based on a corporate database; and
prevent access to particular virtual execution environments (104) used to run secure device applications by controlling the state of the individual virtual execution environments (104-1, 104-2, 104-3, 104-n), when the mobile computing apparatus is detected as being outside a predefined set of office locations based on the current contextual information and the context meta-data, wherein the current contextual information comprises the device's geographical location.

2. The mobile computing apparatus (200) of claim 1 wherein the processor (202) is configured to control access to the activated one or more of the plurality of virtual execution environments (104) based on a set of user credentials.

3. The mobile computing apparatus (200) of claim 1 or 2 wherein the plurality of virtual execution environments (104) comprises one of a hardware virtualization and an operating system virtualization.

4. The mobile computing apparatus (200) of any of the preceding claims 1 through 3 wherein the processor (202) is configured to provide hardware virtualization and to host the activated one or more of the plurality of virtual execution environments as guest software, wherein the activated one or more of the plurality of virtual execution environments comprises an operating system.

5. The mobile computing apparatus (200) of any of the preceding claims 1 through 4 wherein the processor (202) is configured to isolate one virtual execution environment of the plurality of virtual execution environments (104) from another of the plurality of virtual execution environments (104).

6. A method (300) for a mobile computing apparatus comprising:
maintaining (302) a plurality of virtual execution environments;
determining (304) context meta-data for the plurality of virtual execution environments ;
collecting (306) current contextual information for the computing apparatus; and
activating (308) one or more of the plurality of virtual execution environments based on the collected current contextual information and the context meta-data,
**characterized in that** the method further comprises:
determining the context meta-data for the plurality of virtual execution environments (104) by determining a plurality of environment meta-data, wherein each environment meta- data in the plurality of environment meta-data is associated with a corresponding virtual execution environment in the plurality of virtual execution environments (104), wherein the environment meta-data comprises corporate IT security policies and a user's working location, wherein the processor (202) is configured to automatically update the environment meta-data based on a corporate database; and
preventing access to particular virtual execution environments (104) used to run secure device applications by controlling the state of the individual virtual execution environments (104-1, 104-2, 104-3, 104-n), when the mobile computing apparatus is detected as being outside a predefined set of office locations based on the current contextual information and the context meta-data, wherein the current contextual information comprises the device's geographical location.

7. A computer program product comprising non-transitory computer program instructions that when executed by a mobile computing apparatus (200) cause the mobile computing apparatus (200) to perform the method according to claim 6.

## Patentansprüche

1. Mobile Rechenvorrichtung (200), einen Prozessor (202) umfassend, wobei der Prozessor (202) für Folgendes konfiguriert ist:
Aufrechterhalten einer Mehrzahl virtueller Ausführungsumgebungen (104),
Bestimmen von Kontext-Metadaten für die Mehrzahl virtueller Ausführungsumgebungen (104),
Erfassen aktueller kontextabhängiger Informationen für die Rechenvorrichtung (200) und Aktivieren einer oder mehrerer Ausführungsumgebungen der Mehrzahl virtueller Ausführungsumgebungen (104) basierend auf den erfassten aktuellen kontextabhängigen Informationen und den Kontext-Metadaten,
**dadurch gekennzeichnet, dass**
der Prozessor (202) für Folgendes konfiguriert ist:
Bestimmen der Kontext-Metadaten für die Mehrzahl virtueller Ausführungsumgebungen (104) durch Bestimmen einer Mehrzahl von Umgebungs-Metadaten, wobei die Umgebungs-Metadaten in der Mehrzahl von Umgebungs-Metadaten jeweils einer entsprechenden virtuellen Ausführungsumgebung in der Mehrzahl virtueller Ausführungsumgebungen (104) zugeordnet sind, wobei die Umgebungs-Metadaten Unternehmens-IT-Sicherheitsrichtlinien und einen Benutzerarbeitsstandort umfassen, wobei der Prozessor (202) dafür konfiguriert ist, die Umgebungs-Metadaten basierend auf einer Unternehmensdatenbank zu aktualisieren, und
Verhindern des Zugriffs auf bestimmte virtuelle Ausführungsumgebungen (104), die verwendet werden, um sichere Geräteanwendungen auszuführen, indem der Zustand der einzelnen virtuellen Ausführungsumgebungen (104-1, 104-2, 104-3, 104-n) kontrolliert wird, wenn die mobile Rechenvorrichtung basierend auf den aktuellen kontextabhängigen Informationen und den Kontext-Metadaten als außerhalb eines vordefinierten Satzes von Bürostandorten erkannt wird, wobei die aktuellen kontextabhängigen Informationen den geografischen Standort des Geräts umfassen.

2. Mobile Rechenvorrichtung (200) nach Anspruch 1, wobei der Prozessor (202) dafür konfiguriert ist, basierend auf einem Satz von Benutzerberechtigungsnachweisen den Zugriff auf die aktivierte eine oder die aktivierten mehreren Ausführungsumgebungen der Mehrzahl virtueller Ausführungsumgebungen (104) zu kontrollieren.

3. Mobile Rechenvorrichtung (200) nach Anspruch 1 oder 2, wobei die Mehrzahl virtueller Ausführungsumgebungen (104) eines von Hardware-Virtualisierung und Betriebssystemvirtualisierung umfasst.

4. Mobile Rechenvorrichtung (200) nach einem der Ansprüche 1 bis 3, wobei der Prozessor (202) dafür konfiguriert ist, Hardware-Virtualisierung bereitzustellen und die aktivierte eine oder die aktivierten mehreren Ausführungsumgebungen der Mehrzahl virtueller Ausführungsumgebungen (104) als Gast-Software zu hosten, wobei die aktivierte eine oder die aktivierten mehreren Ausführungsumgebungen der Mehrzahl virtueller Ausführungsumgebungen ein Betriebssystem umfasst/umfassen.

5. Mobile Rechenvorrichtung (200) nach einem der Ansprüche 1 bis 4, wobei der Prozessor (202) dafür konfiguriert ist, eine virtuelle Ausführungsumgebung der Mehrzahl virtueller Ausführungsumgebungen (104) von einer anderen Ausführungsumgebung der Mehrzahl virtueller Ausführungsumgebungen (104) zu isolieren.

6. Verfahren (300) für eine mobile Rechenvorrichtung, Folgendes umfassend:
Aufrechterhalten (302) einer Mehrzahl virtueller Ausführungsumgebungen,
Bestimmen (304) von Kontext-Metadaten für die Mehrzahl virtueller Ausführungsumgebungen,
Erfassen (306) aktueller kontextabhängiger Informationen für die Rechenvorrichtung und Aktivieren (308) einer oder mehrerer Ausführungsumgebungen der Mehrzahl virtueller Ausführungsumgebungen basierend auf den erfassten aktuellen kontextabhängigen Informationen und den Kontext-Metadaten,
**dadurch gekennzeichnet, dass** das Verfahren ferner Folgendes umfasst:
Bestimmen der Kontext-Metadaten für die Mehrzahl virtueller Ausführungsumgebungen (104) durch Bestimmen einer Mehrzahl von Umgebungs-Metadaten, wobei die Umgebungs-Metadaten in der Mehrzahl von Umgebungs-Metadaten jeweils einer entsprechenden virtuellen Ausführungsumgebung in der Mehrzahl virtueller Ausführungsumgebungen (104) zugeordnet sind, wobei die Umgebungs-Metadaten Unternehmens-IT-Sicherheitsrichtlinien und einen Benutzerarbeitsplatz umfassen, wobei der Prozessor (202) dafür konfiguriert ist, die Umgebungs-Metadaten basierend auf einer Unternehmensdatenbank automatisch zu aktualisieren, und
Verhindern des Zugriffs auf bestimmte virtuelle Ausführungsumgebungen (104), die verwendet werden, um sichere Geräteanwendungen auszuführen, indem der Zustand der einzelnen virtuellen Ausführungsumgebungen (104-1, 104-2, 104-3, 104-n) kontrolliert wird, wenn die mobile Rechenvorrichtung basierend auf den aktuellen kontextabhängigen Informationen und den Kontext-Metadaten außerhalb eines vordefinierten Satzes von Bürostandorten erkannt wird, wobei die aktuellen kontextabhängigen Informationen den geografischen Standort des Geräts umfassen.

7. Computerprogrammprodukt, nicht-flüchtige Computerprogrammbefehle umfassend, die bei Ausführung durch eine mobile Rechenvorrichtung (200) die mobile Rechenvorrichtung (200) veranlassen, das Verfahren nach Anspruch 6 auszuführen.

## Revendications

1. Appareil informatique mobile (200) comportant un processeur (202), le processeur (202) étant configuré pour :
entretenir une pluralité d'environnements virtuels (104) d'exécution ;
déterminer des métadonnées de contexte pour la pluralité d'environnements virtuels (104) d'exécution ;
collecter des informations contextuelles actuelles pour l'appareil informatique (200) ; et
activer un ou plusieurs environnements de la pluralité d'environnements virtuels (104) d'exécution d'après les informations contextuelles actuelles collectées et les métadonnées de contexte,
**caractérisé en ce que**
le processeur (202) est configuré pour :
déterminer les métadonnées de contexte pour la pluralité d'environnements virtuels (104) d'exécution en déterminant une pluralité de métadonnées d'environnement, chaque métadonnée d'environnement de la pluralité de métadonnées d'environnement étant associée à un environnement virtuel d'exécution correspondant dans la pluralité d'environnements virtuels (104) d'exécution, les métadonnées d'environnement comportant des politiques de sécurité informatique d'entreprise et le lieu de travail d'un utilisateur, le processeur (202) étant configuré pour mettre à jour automatiquement les métadonnées d'environnement d'après une base de données d'entreprise ; et
empêcher l'accès à des environnements virtuels (104) d'exécution particuliers utilisés pour exécuter des applications de dispositifs sécurisés en commandant l'état des environnements virtuels (104-1, 104-2, 104-3, 104-n) d'exécution individuels, lorsqu'il est détecté que l'appareil informatique mobile se trouve à l'extérieur d'un ensemble prédéfini de locaux de bureaux d'après les informations contextuelles actuelles et les métadonnées de contexte, les informations contextuelles actuelles comportant l'emplacement géographique du dispositif.

2. Appareil informatique mobile (200) selon la revendication 1, le processeur (202) étant configuré pour contrôler l'accès à l'environnement ou aux environnements activés de la pluralité d'environnements virtuels (104) d'exécution d'après un ensemble de justificatifs d'utilisateur.

3. Appareil informatique mobile (200) selon la revendication 1 ou 2, la pluralité d'environnements virtuels (104) d'exécution comportant soit une virtualisation matérielle, soit une virtualisation de système d'exploitation.

4. Appareil informatique mobile (200) selon l'une quelconque des revendications 1 à 3 qui précèdent, le processeur (202) étant configuré pour assurer une virtualisation matérielle et pour héberger l'environnement ou les environnements activés de la pluralité d'environnements virtuels d'exécution en tant que logiciel invité, l'environnement ou les environnements activés de la pluralité d'environnements virtuels d'exécution comportant un système d'exploitation.

5. Appareil informatique mobile (200) selon l'une quelconque des revendications 1 à 4 qui précèdent, le processeur (202) étant configuré pour isoler un environnement virtuel d'exécution de la pluralité d'environnements virtuels (104) d'exécution par rapport à un autre environnement de la pluralité d'environnements virtuels (104) d'exécution.

6. Procédé (300) pour un appareil informatique mobile, comportant les étapes consistant à :
entretenir (302) une pluralité d'environnements virtuels d'exécution ;
déterminer (304) des métadonnées de contexte pour la pluralité d'environnements virtuels d'exécution ;
collecter (306) des informations contextuelles actuelles pour l'appareil informatique ; et
activer (308) un ou plusieurs environnements de la pluralité d'environnements virtuels d'exécution d'après les informations contextuelles actuelles collectées et les métadonnées de contexte,
**caractérisé en ce que** le procédé comporte en outre les étapes consistant à :
déterminer les métadonnées de contexte pour la pluralité d'environnements virtuels (104) d'exécution en déterminant une pluralité de métadonnées d'environnement, chaque métadonnée d'environnement de la pluralité de métadonnées d'environnement étant associée à un environnement virtuel d'exécution correspondant dans la pluralité d'environnements virtuels (104) d'exécution, les métadonnées d'environnement comportant des politiques de sécurité informatique d'entreprise et le lieu de travail d'un utilisateur, le processeur (202) étant configuré pour mettre à jour automatiquement les métadonnées d'environnement d'après une base de données d'entreprise ; et
empêcher l'accès à des environnements virtuels (104) d'exécution particuliers utilisés pour exécuter des applications de dispositifs sécurisés en commandant l'état des environnements virtuels (104-1, 104-2, 104-3, 104-n) d'exécution individuels, lorsqu'il est détecté que l'appareil informatique mobile se trouve à l'extérieur d'un ensemble prédéfini de locaux de bureaux d'après les informations contextuelles actuelles et les métadonnées de contexte, les informations contextuelles actuelles comportant l'emplacement géographique du dispositif.

7. Produit de programme informatique comportant des instructions non transitoires de programme informatique qui, lorsqu'elles sont exécutées par un appareil informatique mobile (200), amènent l'appareil informatique mobile (200) à réaliser le procédé selon la revendication 6.
